# EUROPÄISCHE PATENTSCHRIFT

(11) **EP 0 616 553 B1**
(45) Veröffentlichungstag und Bekanntmachung des Hinweises auf die Patenterteilung: **21.06.1995**
(21) Anmeldenummer: 92923689.1
(22) Anmeldetag: 01.12.1992
(51) Int. Cl.: B01F 15/04

(54) **VERFAHREN UND VORRICHTUNG ZUR ERZEUGUNG EXAKTER MISCHUNGSVERHÄLTNISSE INSBESONDERE BEI DER VERDÜNNUNG VON BELEBTSCHLAMM MIT KLARWASSER**
METHOD AND DEVICE FOR THE PRODUCTION OF A MIXTURE OF EXACT PROPORTIONS, IN PARTICULAR THE DILUTION OF ACTIVATED SLUDGE WITH CLEAN WATER
PROCEDE ET DISPOSITIF POUR LA PRODUCTION DE RAPPORTS EXACTS DE MELANGE NOTAMMENT LORS DE LA DILUTION DE BOUE ACTIVEE AVEC DE L'EAU CLARIFIEE

(30) Priorität: 07.12.1991 DE 4140358; 27.02.1992 DE 4206108
(43) Veröffentlichungstag der Anmeldung: 28.09.1994
(73) Patentinhaber: BTG ANLAGENTECHNIK GMBH, D-4630 Bochum 1 (DE)
(72) Erfinder: BÄUML, Norbert, D-8900 Augsburg (DE)
(74) Vertreter: Zipse + Habersack
(86) Internationale Anmeldenummer: DE9200999
(87) Internationale Veröffentlichungsnummer: WO9311864

(56) Entgegenhaltungen:
- EP-A- 0 105 842
- FR-A- 1 482 607
- GB-A- 781 818
- GB-A- 2 100 612

## Beschreibung

Die Erfindung betrifft ein Verfahren und eine Vorrichtung zur Erzeugung exakter Mischungsverhältnisse zwischen zumindest 2 Proben, insbesondere bei der Verdünnung von Belebtschlamm mit Klarwasser. Ein wichtiger Betriebsparameter für Belebungsbecken von Kläranlagen ist das Schlammvolumen des Belebtschlamms, d.h. der Volumenanteil der nach einer gewissen Verweilzeit in einem Meßzylinder abgesetzten Schlammpartikel bezogen auf das Gesamtvolumen des in den Meßzylinder eingeleiteten Belebtschlamms. Um dieses Schlammvolumen auf einen optimalen Wert einregeln zu können, ist dessen periodische Kontrolle erforderlich. Hierzu wird in einem bestimmten Meßzyklus Belebtschlamm aus dem Belebungsbecken in einen Meßzylinder abgezogen, wo dann nach einer gewissen Verweilzeit die Höhe des abgesetzten Schlamms an einer Meßskala abgelesen oder mittels eines optischen Detektors festgestellt wird.

Bei einem zu erwartenden Schlammvolumen größer als 250 ml/ltr muß nach DEV/Norm die Sogenannte Verdünnugsmethode angewandt werden, d.h. die aus dem Belebungsbecken abgezogene Probe wird mit geklärtem Abwasser aus dem Nachklärbecken in einem vorgegebenen Verhältnis verdünnt. Um vergleichbare Meßergebnisse zu erzielen, ist über einen Meßzyklus hinweg bei jeder Probenentnahme ein exakt gleiches Mischungsverhältnis zwischen Belebtschlamm und Klarwasser erforderlich. Ein exaktes Mischungsverhältnis ist mit heutigen Methoden nur im Labor realisierbar. Andere vor Ort, d.h. in der Praxis angewandte Methoden mit Dosierung des Fördervolumens von Belebtschlamm und Klarwasser über Dosierventile oder über Pumpen mit einstellbarer Drehzahl liefern kein brauchbares, reproduzierbares Ergebnis.

Aus der DE-A 31 32 706 ist eine Vorrichtung zum Dosieren und Mischen von Getränken aus mehreren flüssigen Komponenten, beispielsweise Sirup und Wasser, bekannt. Es gibt einen Sirup-Abmeßbehälter und einen Wasser-Abmeßbehälter. Der Wasser-Abmeßbehälter wird bis zu einem durch einen Füllstandsregler vorgewählten Füllstand gefüllt, während der Sirup-Abmeßbehälter von einem Sirup-Vorratsbehälter aus über eine Zirkulationsleitung restlos gefüllt wird. Das Dosierverhältnis wird somit einerseits durch den Füllstandsregler des Wasser-Abmeßbehälters und andererseits durch das Volumen des Sirup-Abmeßbehälters bestimmt. Nachteilig an dieser bekannten Vorrichtung ist, daß zur Dosierung des Mischungsverhältnisses vorab eine Dosierung des Wasservolumens mittels Füllstandregler notwendig ist.

Eine aus der DE-A 35 09 031 bekannte Vorrichtung zum Mischen verwendet einen Mehrkammer-Mischungsbehälter mit Trennwänden und Überlaufkanten zwischen den einzelnen Kammern. Zunächst wird eine Mischungskomponente in den Mischungsbehälter eingegeben, bis eine dem gewünschten Mischungsverhältnis entsprechende Anzahl von Kammern gefüllt ist, wobei die Füllung einer nachfolgenden Kammer über die Überlaufkante der Trennwand zur vorherigen, bereits gefüllten Kammer erfolgt. Danach wird die zweite Mischungskomponente nachgefüllt, bis der Mehrkammer-Mischungsbehälter ganz gefüllt ist. Auch bei dieser bekannten Vorrichtung ist eine Vorab-Dosierung der Mischungskomponenten mittels Regelkreis erforderlich. Von der ersten Mischungskomponente darf nur soviel eingefüllt werden, bis soviele Kammern wie gewünscht gefüllt sind. Die Füllung mit der ersten Mischungskomponente muß dann exakt abgebrochen werden, bevor diese Mischungskomponente in die nachfolgende Kammer überläuft. Der Füllvorgang mit der zweiten Mischungskomponente muß gestoppt werden, wenn der Mehrkammer-Mischungsbehälter voll ist.

EP-A-0 105 842 zeigt einen Zweikammerbehälter mit einer Behandlungskammer und einer Nachfüllkammer, in denen beispielsweise Entwickler- oder Fixierlösungen für photographisches Material von gleicher oder unterschiedlicher Konzentration zubereitet werden. Eine Standardmenge z.B. konzentrierter Entwicklerflüssigkeit wird in die Nachfüllkammer eingegeben, wo sie bis zum Pegel h₁ ansteigt, wonach weitere Flüssigkeit durch den Überlauf in die Behandlungskammer abfließt, um diese bis zur Höhe h₂ zu füllen. Ein Verlängerungsrohr wird dann auf den Überlauf aufgepaßt und das obere Ende trägt ein ein Vermischen verhinderndes becherförmiges Gefäß zum Empfang eines Zuflußes einer Verdünnungsflüssigkeit z.B. aus einem durch einen Kahn oder ein Ventil gesteuerten Wasserzuleitungsrohr. Das Wasser fließt in das becherförmige Gefäß und durch den Auslaß wieder hinaus, bis es die Kammer bis zum Pegel h₃ gleich der Höhe des Verlängerungsrohres füllt. Ist die Nachfüllkammer gefüllt, so fließt das Wasser durch den Auslaß des Verlängerungsrohres in die Kammer ab, bis letztere bis zur gewünschten Höhe h₄ gefüllt ist, worauf die Wasserzufuhr von Hand oder gesteuert durch einen Schwimmerschalter abgeschaltet wird.

Bei der Zurbereitung der Entwickler- bzw. Fixierlösung in bestimmten Konzentrationen geht man somit einerseits von einer Standardmenge konzentrierter Lösung und andererseits von einer gesteuerten Menge Verdünnungslösung aus.

Der Erfindung liegt die Aufgabe zugrunde, ein praxistaugliches Verfahren zur Erzeugung exakter Mischungsverhältnisse zwischen zumindest 2 Proben sowie eine Vorrichtung zur Durchführung dieses Verfahrens zu schaffen. Das zu schaffende Verfahren soll leicht handhabbar sein und nur geringen Geräteaufwand erfordern.

Die gestellte Aufgabe wird mit einem Verfahren gelöst, wie es in den beigefügten Verfahrensansprüchen gekennzeichnet ist. Eine Vorrichtung zur Durchführung des erfindungsgemäßen Verfahrens ist in den beigefügten Vorrichtungsansprüchen beschrieben. Weiterbildungen der Erfindung ergeben sich aus den Unteransprüchen.

Nach dem erfindungsgemäßen Verfahren werden beispielsweise der aus dem Belebungsbecken einer Kläranlage abgezogene Belebtschlamm und das aus dem Nachklärbecken abgezogene Klarwasser in Behälter gefördert, deren Fassungsvermögen bis zu einem Überlauf im selben Verhältnis wie das gewünschte Mischungsverhältnis steht. Der Inhalt der bis zu den Überläufen gefüllten Probenbehälter wird dann in einen gemeinsamen Mischungsbehälter abgegeben. Das erzielte Mischungsverhältnis ist exakt und entspricht dem Fassungsvermögen der Probenbehälter bis zu ihrem Überlauf. Mittels eines verstellbaren Überlaufs kann das Fassungvermögen und damit das Mischungsverhältnis geändert werden. Da üblicherweise eine begrenzte Anzahl von Mischungsverhältnissen erforderlich ist, können an den Probenbehältern mehrere Überläufe in entsprechenden Höhen angeordnet sein, wobei jeweils nur der Überlauf entsprechend dem gewünschten Mischungsverhältnis geöffnet wird. Eine weitere Möglichkeit zur Variierung des Mischungsverhältnisses besteht darin, Behälter mit unterschiedlichem Fassungsvermögen auszutauschen. Der über die Überläufe abfliesende Belebtschlamm und das Klarwasser werden zum Belebungsbecken zurückgeführt.

Da das Mischungsverhältnis der Proben allein durch das Fassungsvermögen der Probenbehälter bestimmt wird, ist eine Dosierung des Fördervolumens der zu mischenden Proben nicht erforderlich. Vielmehr ist lediglich darauf zu achten, daß ein Probenvolumen gefördert wird, das ausreicht, den Probenbehälter bis zum Überlauf zu füllen. Dies kann mittels zeitgesteuerter Förderpumpen sichergestellt werden.

Das erfindungsgemäße Verfahren und die Vorrichtung zur Durchführung des Verfahrens sind allgemein überall anwendbar, wo exakte Mischungsverhältnisse von zumindest 2 Proben hergestellt werden sollen.

Die Erfindung wird nachfolgend anhand beigefügter Zeichnungen näher erläutert, die am Beispiel von Belebtschlamm und Klarwasser schematisch drei Ausführungsvarianten einer Vorrichtung zur Erzeugung exakter Mischungsverhältnisse zeigen.

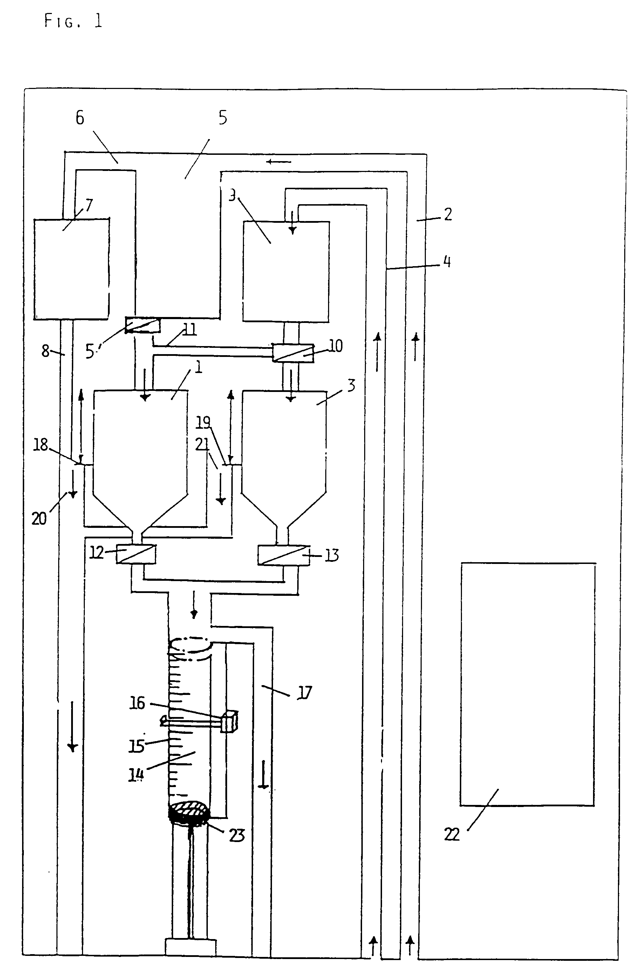

Nach Figur 1 stehen ein Belebtschlammbehälter 1 über einen Zulauf 2 mit dem (nicht gezeigten) Belebungsbecken einer Kläranlage und ein Klarwasserbehälter 3 über einen Zulauf 4 mit dem (ebenfalls nicht gezeigten) Nachklärbecken der Kläranlage in Verbindung. Im Zulauf 2 zum Belebtschlammbehälter 1 sitzt ein Behälter 5 mit einem Auslaßventil 5' und einem Abzweig 6 zu einer Belebtschlammpumpe 7, deren Ausgang 8 zum Belebungsbecken zurückgeführt ist. Im Zulauf 4 zum Klarwasserbehälter 3 ist eine Klarwasserpumpe 9 angeordnet, und zwischen Pumpe 9 und Klarwasserbehälter 3 sitzt im Zulauf 4 ein Steuerventil 10 mit einem Abzweig 11 zum Zulauf 2 zum Belebtschlammbehälter 1.

Der Belebtschlammbehälter 1 steht über ein Steuerventil 12 und der Klarwasserbehälter 3 über ein Steuerventil 13 mit einem Meßzylinder 14 mit einer Meßskala 15 bzw. einem höheneinstellbaren optischen Detektor 16 in Verbindung. Ein Kolben 23 im Meßzylinder 14 gestattet das Ausstoßen des Meßzylinderinhalts über eine Rückführleitung 17 zum Belebungsbecken.

Sowohl der Belebtschlammbehälter 1 als auch der Klarwasserbehälter 3 sind mit einem verstellbaren Überlaufgerinne 18 bzw. 19 ausgerüstet, die über eine Rückführleitung 20 bzw. 21 ebenfalls zum Belebungsbecken zurückgeführt sind. Bei einem Gesamtbehältervolumen von 1000 ml machen diese Überlaufgerinne 18 und 19 eine Verstellung des Behältervolumens jeweils bis zum Überlaufgerinne von beispielsweise 100 ml-1000 ml möglich.

Eine Steuerelektronik plus Schreiber ist bei 22 dargestellt.

Die beschriebene Vorrichtung arbeitet wie folgt: In der Grundstellung des Meßzylinders 14 befindet sich der Kolben 23 in unterster Stellung. Der Kolben wird nur benützt, um nach dem Meßzyklus das Schlamm-Wasser-Gemisch aus dem Meßzylinder zu "pressen". Die Belebtschlamm pumpe 7 und die Klarwasserpumpe 9 fördern mit einer einstellbaren Zeit mindestens 1000 ml in die jeweiligen Behälter 1 und 3 mit Überlaufgerinne. Die Belebtschlammpumpe 7 ist in einem Abzweig des Zulaufs 2 angeordnet, damit nach einer Ansaugphase, in welcher sich der Behälter 5 füllt, und nach Öffnen des Ablaßventils 5' Belebtschlamm unmittelbar in den Belebtschlammbehälter 1 fließt und somit die in den Behälter 1 gelangenden Schlammflocken nicht von der Förderpumpe zerhäckselt werden.

In den Behältern 1 und 3 kann man mit den verstellbaren Überlaufgerinnen 18 und 19 das gewünschte Verdünnungsverhältnis herstellen,

| | | |
|---|---|---|
| z.Bsp.: | Belebtschlammbehälter 1 | 250 ml |
| | Klarwasserbehälter 3 | 750 ml |
| | oder | |
| | Belebtschlammbehälter 1 | 500 ml |
| | Klarwasserbehälter 3 | 500 ml. |

Nun wird wie im Labor zuerst das Klarwasser in den Meßzylinder 14 eingeführt, indem das Ventil 13 öffnet. Danach öffnet das Ventil 12, damit der Belebtschlamm in den Meßzylinder 14 fließen kann. Nachdem die Behälter 1 und 3 leer sind, schließen die Ventile 12 und 13 wieder. Das Ventil 10 im Klarwasser-Zulauf 4 stellt über den Abzweig 11 eine Verbindung zum Belebtschlammbehälter 1 her, wonach die Pumpe 9 zeitgesteuert den Belebtschlammbehälter 1 mit Klarwasser füllt. Diese Maßnahme erfolgt, damit keine Schlammreste an der Behälterwand festbacken.

Nach einer Verweilzeit des Schlamm-Wasser-Gemischs im Meßzylinder 14 von z.B. 30 Minuten wird an der Meßskala 15 oder mittels des optischen Detektors 16 der Höhenstand des abgesetzten Schlamms und damit das Schlammvolumen ermittelt. Nun drückt der Kolben 23 das Schlamm-Wasser-Gemisch aus dem Meßzylinder 14 über die Leitung 17 zurück zum Belebungsbecken. In der oberen (strichpunktiert dargestellten) Stellung des Kolbens 23, d.h. wenn der Kolben 23 in Höhe der Einmündung der Leitung 17 ist, öffnet das Ventil 12, so daß das Wasser im Belebtschlammbehälter 1 mit gelösten Schlammresten ebenfalls über die Leitung 17 abfließt. Danach schließt das Ventil 12 wieder und der Kolben 23 kehrt in seine untere Ausgangsstellung zurück. Das Ventil 10 hat ebenfalls seine Ausgangsstellung eingenommen.

Nun beginnt ein neuer Meßzyklus und die Pumpen 7 und 9 beginnen erneut, die Behälter 1 und 3 zu füllen.

Der Vorteil der Ausführungsvariante nach Fig. 1 ist der, daß die Reihenfolge, in der Klarwasser und Belebtschlamm in den Meßzylinder 14 eingeführt werden, geändert oder auch beides gleichzeitig in den Meßzylinder abgegeben werden kann.

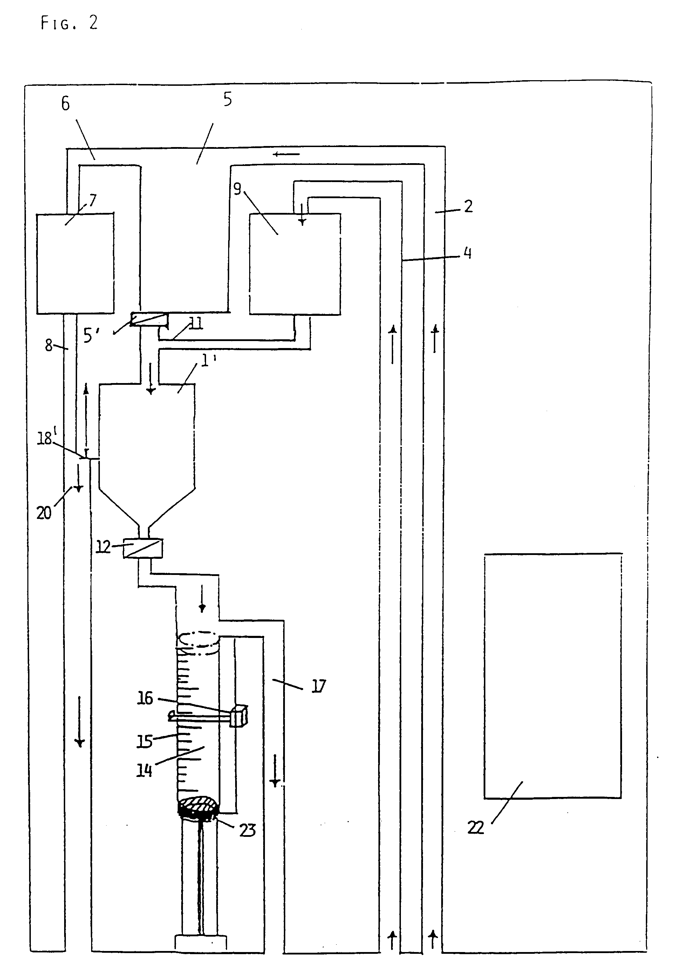

Die Ausführungsvariante nach Figur 2 unterscheidet sich von der zuvor beschriebenen Variante dadurch, daß nur ein Probenbehälter 1' vorgesehen ist, der nacheinander zuerst mit Klarwasser und danach mit Belebtschlamm (oder umgekehrt) gefüllt wird. Die jeweilige Füllmenge und damit das Verdünnungs- bzw. Mischungsverhältnis von Klarwasser zu Belebtschlamm wird mittels des verstellbaren Überlaufgerinnes 18' eingestellt. Der Inhalt des zuerst mit Klarwasser bis zum Überlaufgerinne 18' gefüllten Probenbehälters 1' sowie der Inhalt des danach mit Belebtschlamm bis zum entsprechend eingestellten Überlaufgerinne 18' gefüllten Probenbehälters 1' werden jeweils über das Steuerventil 12 in den Meßzylinder 14 abgegeben.

Der Vorteil der Ausführungsvariante nach Figur 2 ist der geringere Geräteaufwand. Zur weiteren Verringerung des Geräteaufwandes kann die Förderpumpe 9 eingespart werden, indem der Klarwasserzulauf 4 an das mit entsprechenden Schaltpositionen ausgerüstete Steuerventil 5' angeschlossen wird.

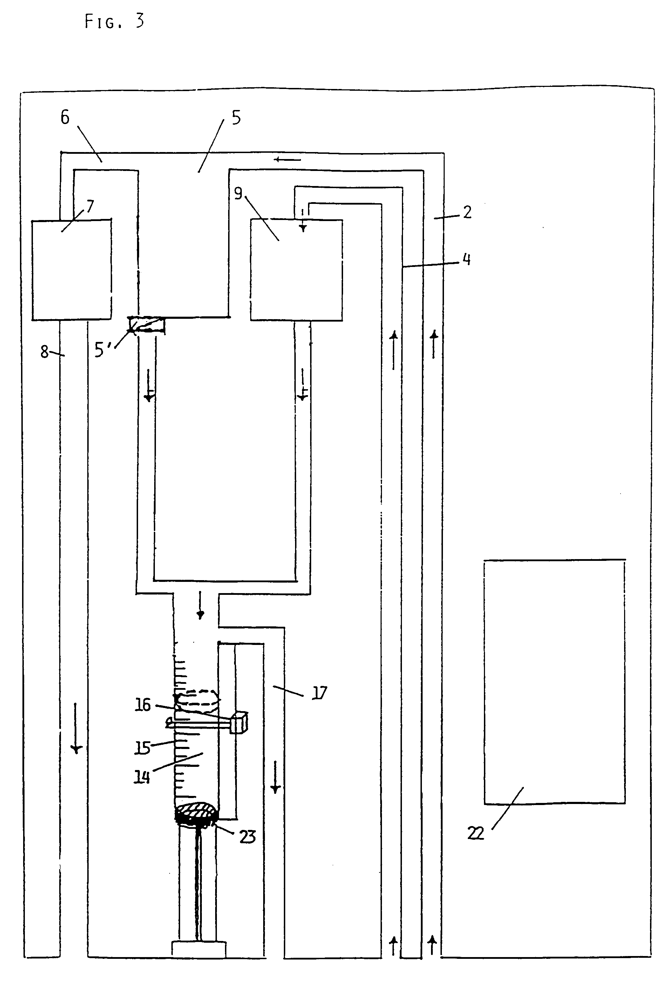

Die Ausführungsvariante nach Figur 3 zeichnet sich durch besonders geringen Geräteaufwand aus, indem auf gesonderte Probenbehälter 1 und 3 verzichtet, ist. In der Grundstellung des Meßzylinders 14 befindet sich der Kolben 23 in einer (gestrichelt gezeigten) Mittelstellung derart, daß das Zylindervolumen oberhalb des Kolbens bis zur Überlaufleitung 17 dem für die Herstellung des gewünschten Verdünnungsverhältnisses benötigten Klarwasservolumen entspricht. Über die Klarwasserpumpe 9 wird dann zunächst Klarwasser in den Meßzylinder bis zur Überlaufleitung 17 gefördert. Sodann wird der Kolben 23 in seine Grundstellung nach unten gefahren und das Restvolumen oberhalb des Klarwassers bis zur Überlaufleitung 17 mittels der Förderpumpe 7 mit Belebtschlamm aufgefüllt. Zu Verhinderung einer vorzeitigen Durchmischung von Klarwasser und Belebtschlamm soll der Meßzylinder 14 im Verhältnis zu seinem Durchmesser schlank ausgebildet sein. Die Steuerung des Kolbens 23 zur Erzielung des z.B. über eine Eingabetastatur eingegebenen Verdünnungsverhältnisses erfolgt zweckmäßig über einen Rechner mit geeigneter Software. Wie bei der Ausführungsvariante nach Figur 2 können Klarwasser und Belebtschlamm auch hier mittels einer einzigen Pumpe zugeführt werden.

## Patentansprüche

1. Verfahren zur Erzeugung exakter Mischungsverhältnisse zwischen zumindest zwei Proben unter Verwendung von Behältern (1,3), deren Fassungsvermögen bis zu einem Überlauf (18,19) im selben Verhältnis wie das gewünschte Mischungsverhältnis steht, indem die zu mischenden Proben ohne Dosierung jeweils einzeln in die Behälter gefüllt werden, bis überschüssige Probenmenge über den Überlauf abfließt, und daß der Inhalt der bis zu den Überläufen gefüllten Probenbehälter in einen gemeinsamen Mischungsbehälter (14) abgegeben wird.

2. Verfahren nach Anspruch 1,
**gekennzeichnet** durch den Einsatz von Probenbehältern (1,3) unterschiedlichen oder veränderbaren Fassungsvermögens bis zum Überlauf (18,19).

3. Verfahren zur Erzeugung exakter Mischungsverhältnisse zwischen zumindest zwei Proben unter Verwendung eines Behälters (1'), dessen Fassungsvermögen bis zum einem Überlauf (18') veränderbar ist, so daß das veränderte Fassungsvermögen zum ursprünglichen Fassungsvermögen in dem gewünschten Mischungsverhältnis steht, indem die zu mischenden Proben jeweils ohne Dosierung nacheinander in den Behälter gefüllt werden, jeweils bis überschüssige Probenmenge über den Überlauf abfließt, und daß der Inhalt des jeweils mit einer Probe bis zum Überlauf gefüllten Probenbehälters in einen gemeinsamen Mischungsbehälter (14) abgegeben wird.

4. Verfahren zur Erzeugung exakter Mischungsverhältnisse zwischen zumindest zwei Proben, indem eine erste Probe ohne Dosierung in einen Behälter (14) mit vorgegebenem Fassungsvermögen bis zu einem Überlauf gefüllt wird, bis überschüssige Probenmenge über den Überlauf abfließt, daß das Fassungsvermögen des Behälters bis zu dem Überlauf so vergrößert wird, daß das neu hinzugekommene Behältervolumen zum ursprünglichen Behältervolumen im selben Verhältnis wie das gewünschte Mischungsverhältnis steht und daß eine zweite Probe ohne Dosierung in den Behälter eingegeben wird, bis überschüssige Probenmenge über den Überlauf abfließt.

5. Verfahren nach einem der Ansprüche 1 bis 4 zur Verdünnung von Belebtschlamm mit Klarwasser zwecks Bestimmung des Schlammvolumens, nachdem sich der Schlamm im Mischungsbehälter abgesetzt hat.

6. Vorrichtung zur Durchführung des Verfahrens nach Anspruch 1 oder 2,
**gekennzeichnet** durch zumindest zwei Probenbehälter (1,3), deren Fassungsvermögen bis zu einem Überlauf (18,19) im selben Verhältnis steht wie das zu erzeugende Mischungsverhältnis der Proben, und durch einen Mischungsbehälter (14) zur Aufnahme des Inhalts der jeweils bis zum Überlauf gefüllten Probenbehälter.

7. Vorrichtung nach Anspruch 6,
dadurch **gekennzeichnet,** daß das Fassungsvermögen eines Probenbehälters (1,3) durch unterschiedliche Höhenanordnung des Überlaufs (18,19) veränderbar ist.

8. Vorrichtung zur Durchführung des Verfahrens nach Anspruch 3,
**gekennzeichnet** durch einen Probenbehälter (1') mit einem Überlauf (18'), dessen Fassungsvermögen bis zu dem Überlauf veränderbar ist, und durch einen Mischungsbehälter (14) zur Aufnahme der Inhalte des jeweils bis zum Überlauf gefüllten Probenbehälters.

9. Vorrichtung zur Durchführung des Verfahrens nach Anspruch 4,
**gekennzeichnet** durch einen Mischungsbehälter (14) mit einem Überlauf (17), dessen Fassungsvermögen bis zu dem Überlauf veränderbar ist.

10. Vorrichtung nach Anspruch 9,
dadurch **gekennzeichnet,** daß der Mischungsbehälter (14) ein Zylinder ist mit einem in dem Zylinder verschiebbaren Kolben (23).

11. Vorrichtung nach Anspruch 10,
dadurch **gekennzeichnet,** daß der Zylinder (14) zur Verhinderung einer Vorzeitigen Durchmischung der Proben im Verhältnis zu seinem Durchmesser schlank ausgebildet ist.

12. Vorrichtung nach einem der Ansprüche 9 bis 11,
**gekennzeichnet** durch eine Rechnersteuerung mit Eingabetastatur zur Veränderung des Fassungsvermögens des Mischungsbehälters entsprechend einem eingegebenen Mischungsverhältnis.

13. Vorrichtung nach einem der Ansprüche 6 bis 8,
dadurch **gekennzeichnet,** daß im Zulauf der Probenbehälter (1,3) bzw. des Probenbehälters eine zeitgesteuerte Pumpe (7,9) und im Ablauf der Probenbehälter zum Mischungsbehälter (14) ein Steuerventil (12, 13) angeordnet ist.

14. Vorrichtung nach Anspruch 13 zur Verdünnung von Belebtschlamm mit Klarwasser,
dadurch **gekennzeichnet,** daß eine Förderpumpe (7) in einem Seitenzweig (6) des Belebtschlammzulaufs (2) zum Probenbehälter (1) angeordnet und über ein Steuerventil (5) mit diesem Zulauf verbunden ist.

15. Vorrichtung nach Anspruch 13 oder 14 zur Verdünnung von Belebtschlamm mit Klarwasser, mit zumindest zwei Probenbehälter,
**gekennzeichnet** durch eine Verbindungsleitung (11) zu dem Belebtschlamm-Zulauf (2), welche Verbindungsleitung über ein Steuerventil (10) an den Klarwasser-Zulauf (4) anschließt.

## Claims

1. Method for the production of a mixture of exact proportions between at least two samples using containers (1, 3), the capacity of which up to an overflow (18, 19) is in the same proportion as the desired mixture proportion, wherein the samples to be mixed are filled, without being measured, separately into the containers, until an excess quantity of the sample spills over the overflow, and the contents of the sample containers which have been filled up to the overflows are put into a common mixture container (14).

2. Method according to Claim 1, characterised by the use of sample containers (1, 3) of differing or variable capacities up to the overflow (18, 19).

3. Method for the production of a mixture of exact proportions between at least two samples using a container (1'), the capacity of which up to an overflow (18') is variable, so that the varied capacity is in the desired mixture proportion to the original capacity, wherein the samples to be mixed are filled in succession into the container, without being measured, until an excess quantity of the samples spills over the overflow, and the contents of the sample container which has been filled up to the overflow with a sample are put into a common mixture container (14).

4. Method for the production of a mixture of exact proportions between at least two samples, wherein a first sample is filled, without being measured, up to an overflow into a container (14) of predetermined capacity, until an excess quantity of the sample spills over the overflow, the capacity of the container up to the overflow is increased so that the new container volume is in the same proportion to the original container volume as the desired mixture proportion, and a second sample is introduced into the container, without being measured, until an excess quantity of the sample spills over the overflow.

5. Method according to one of Claims 1 to 4 for the dilution of activated sludge with clean water for the purpose of determining the volume of sludge, after the sludge has collected in the mixture container.

6. Device for carrying out the method according to Claim 1 or 2, characterized by at least two sample containers (1, 3), the capacities of which up to an overflow (18, 19) are in the same proportion as the mixture proportions of the samples to be produced, and by a mixture container (14) to receive the contents of the sample containers which have been filled up to the overflow.

7. Device according to Claim 6, characterized in that the capacity of a sample container (1, 3) is variable by varying the height of the overflow (18, 19).

8. Device for carrying out the method according to Claim 3, characterised by a sample container (1') with an overflow (18'), the capacity of which up to the overflow may be varied, and by a mixture container (14) to receive the contents of the sample container which has been filled up to the overflow.

9. Device for carrying out the method according to Claim 4, characterised by a mixture container (14) with an overflow (17), the capacity of which up to the overflow is variable.

10. Device according to Claim 9, characterised in that the mixture container (14) is a cylinder with a plunger (23) which may be moved in the cylinder.

11. Device according to Claim 10, characterised in that the cylinder (14) is formed slim relative to its diameter to prevent a premature mixing of the samples.

12. Device according to one of Claims 9 to 11, characterised by a computer control with input keyboard to vary the capacity of the mixture container corresponding to a mixture proportion being fed in.

13. Device according to one of Claims 6 to 8, characterised in that, in the inlet of the sample containers (1, 3) or sample container, a time-controlled pump (7, 9) is arranged and, in the outlet of the sample containers to the mixture container (14), a control valve (12, 3) is arranged.

14. Device according to Claim 13 for the dilution of activated sludge with clean water, characterised in that a feed pump (7) is arranged in a side-branch (6) of the activated sludge inlet (2) to the sample container (1) and is connected to this inlet via a control valve (5).

15. Device according to Claim 13 or 14 for the dilution of activated sludge with clean water, with at least two sample containers, characterised by a connecting line (11) to the activated sludge inlet (2), which connecting line is joined to the clean water inlet (4) via a control valve (10).

## Revendications

1. Procédé de production de rapports exacts de mélange entre au moins deux échantillons, en utilisant des récipients (1, 3) dont les capacités jusqu'à un trop-plein (18, 19) présentent le même rapport que le rapport souhaité de mélange, procédé selon lequel les échantillons à mélanger sont introduits chacun individuellement dans les récipients, sans dosage, jusqu'à ce que la quantité excédentaire d'échantillon s'écoule par le trop-plein, et le contenu des récipients d'échantillons remplis jusqu'au trop-plein est déversé dans un récipient commun (14) de mélange.

2. Procédé selon la revendication 1, caractérisé par l'utilisation de récipients d'échantillons (1, 3) dont les capacités jusqu'au trop-plein (18, 19) sont différentes ou peuvent être modifiées.

3. Procédé de production de rapports exacts de mélange entre au moins deux échantillons, en utilisant un récipient (1') dont la capacité jusqu'un tropplein (18') peut être modifiée, de sorte que le rapport entre la capacité modifiée et la capacité originale est le même que le rapport souhaité de mélange, procédé selon lequel les échantillons à mélanger sont introduits successivement dans le récipient, à chaque fois sans dosage, jusqu'à ce que la quantité excédentaire d'échantillon s'écoule par le trop-plein, et le contenu du récipient d'échantillon rempli à chaque fois avec un échantillon jusqu'au trop-plein est déversé dans un récipient commun (14) de mélange.

4. Procédé de production de rapports exacts de mélange entre au moins deux échantillons, dans lequel un premier échantillon est introduit sans dosage dans un récipient (14) ayant une capacité prédéfinie jusqu'à un trop-plein, jusqu'à ce que la quantité excédentaire d'échantillon s'écoule par le trop-plein, la capacité du récipient jusqu'au trop-plein est augmentée d'une manière telle que le rapport entre le volume nouvellement augmenté du récipient et le volume original du récipient est le même que le rapport souhaité de mélange, et un deuxième échantillon est introduit sans dosage dans le récipient jusqu'à ce que la quantité excédentaire s'écoule par le trop-plein.

5. Procédé selon l'une des revendications 1 à 4, pour la dilution d'une boue activée avec de l'eau clarifiée dans le but de déterminer le volume de boue après que la boue s'est déposée dans le récipient de mélange.

6. Dispositif pour la mise en oeuvre du procédé selon la revendication 1 ou 2, caractérisé en ce qu'il comporte au moins deux récipients d'échantillons (1, 3) dont le rapport des capacités jusqu'à un trop-plein (18, 19) est le même que le rapport de mélange à produire entre les échantillons, ainsi qu'un récipient de mélange (14) destiné à recevoir le contenu des récipients d'échantillons remplis chacun jusqu'au trop-plein.

7. Dispositif selon la revendication 6, caractérisé en ce que la capacité d'un récipient d'échantillons (1, 3) peut être modifiée grâce à l'agencement du trop-plein (18, 19) à une hauteur variable.

8. Dispositif pour la mise en oeuvre du procédé selon la revendication 3, caractérisé en ce qu'il comporte un récipient d'échantillons (1') avec un trop-plein (18'), dont la capacité jusqu'au tropplein peut être modifiée, ainsi qu'un récipient de mélange (14) destiné à recevoir les contenus du récipient d'échantillons rempli à chaque fois jusqu'au trop-plein.

9. Dispositif pour la mise en oeuvre du procédé selon la revendication 4, caractérisé en ce qu'il comporte un récipient de mélange (14) avec un trop-plein (17), dont la capacité jusqu'au trop-plein peut être modifiée.

10. Dispositif selon la revendication 9, caractérisé en ce que le récipient de mélange (14) est un cylindre avec un piston (23) pouvant être déplacé dans le cylindre.

11. Dispositif selon la revendication 10, caractérisé en ce que le cylindre (14) a une forme allongée par rapport à son diamètre pour empêcher un mélange intime prématuré des échantillons.

12. Dispositif selon l'une des revendications 9 à 11, caractérisé en ce qu'il comporte une commande par ordinateur avec un clavier d'entrée des données pour modifier la capacité du récipient de mélange de manière correspondante à un rapport donné de mélange.

13. Dispositif selon l'une des revendications 6 à 8, caractérisé en ce qu'une pompe commandée (7, 9) est disposée à l'entrée des récipients d'échantillons (1, 3) ou du récipient d'échantillons, et une vanne de pilotage (12, 13) est disposée à la sortie des récipients d'échantillons dans la direction du récipient de mélange (14).

14. Dispositif selon la revendication 13, pour la dilution d'une boue activée avec de l'eau clarifiée, caractérisé en ce qu'une pompe de circulation (7) est disposée dans une branche latérale (6) de la conduite d'amenée (2) de la boue activée vers le récipient d'échantillons (1) et est reliée à cette conduite d'amenée par l'intermédiaire d'une vanne de pilotage (5).

15. Dispositif selon la revendication 13 ou 14, pour la dilution d'une boue activée avec de l'eau clarifiée, comportant au moins deux récipients d'échantillons, caractérisé en ce qu'il comporte une conduite de raccordement (11) avec la conduite d'amenée (2) de la boue activée, ladite conduite de raccordement étant reliée à la conduite d'amenée (4) de l'eau clarifiée par l'intermédiaire d'une vanne de pilotage (10).
